# EUROPÄISCHE PATENTANMELDUNG

(11) **EP 1 510 779 A1**
(43) Veröffentlichungstag der Anmeldung: **02.03.2005**
(21) Anmeldenummer: 03019774.3
(22) Anmeldetag: 29.08.2003
(51) Int. Cl.: G01B 11/03, G01B 21/04

(54) **Verfahren zum Bestimmen von Positionskoordinaten**

(71) Anmelder: metronom AG, 55120 Mainz (DE)
(72) Erfinder: Nabs, David, 39288 Burg (DE); Brüning, Thomas, 55120 Mainz (DE)
(74) Vertreter: Grünecker, Kinkeldey, Stockmair & Schwanhäusser Anwaltssozietät

(57) **Zusammenfassung**

Die Erfindung betrifft ein Verfahren zum Bestimmen von Positionskoordinaten mit den Schritten eines Bereitstellens eines Retroreflektors (2) an einer zu bestimmenden Position, eines Bestimmens der Abstände zwischen wenigstens drei unterschiedlichen, vorbestimmten Positionen (4,4',4'') und der des Retroreflektors unter Verwendung wenigstens eines Laser-Interferometers (3) eines Bestimmens der Positionskoordinaten des Retroreflektors bzgl. der wenigstens drei unterschiedlichen vorbestimmten Positionen aus den bestimmten Abständen. Das Verfahren dient insbesondere der Überprüfung und Kalibrierung van Werkzeugmaschinen oder Koordinaten-Messmaschinen.

## Beschreibung

Die Erfindung betrifft ein Verfahren zum Bestimmen von Positionskoordinaten, insbesondere um Werkzeugmaschinen oder Koordinaten-Messmaschinen zu überprüfen und zu kalibrieren.

Aus dem Stand der Technik sind im Wesentlichen zwei Verfahren bekannt, mit denen Werkzeugmaschinen, insbesondere CNC-Maschinen, und Koordinaten-Messmaschinen kalibriert werden. (Eine CNC(computerized numerical control)-Maschine bzw. ein CNC-Bearbeitungszentrum ist eine von einer CNC-Steuerung geregelte Maschine, bei der die Werkstückbearbeitung durch programmierbare Werkzeugbewegungen ausgeführt wird.)

Gemäß einem ersten Kalibrierverfahren wird ein Referenzobjekt bzw. ein Referenzkörper, dessen Geometrie und Dimensionen bekannt sind, von einem zu kalibrierenden Gerät abgetastet. Eine Kalibrierung erfolgt dann auf Grund der berechneten Unterschiede zwischen den Referenzwerten des Objekts und den erhaltenen Messwerten der Maschine. Nachteilig an diesem Verfahren ist, dass nur verhältnismäßig wenig Punkte für eine Kalibrierung verwendet werden.

Bei einem anderen Kalibrierverfahren wird die Kalibrierung mit Hilfe eines zusätzlichen Koordinaten-Messgeräts durchgeführt. Ein mögliches Koordinaten-Messgerät zur Verwendung in diesem Zusammenhang ist ein Lasertracker. Bei diesem Verfahren fährt das zu kalibrierende Gerät eine Anzahl von Positionen an und trägt dabei ein antastbares Zielobjekt (beispielsweise einen Reflektor). Das Kontrollgerät, d.h. das Koordinaten-Messgerät, erfasst die Position des Zielobjekts an den verschiedenen angefahrenen Positionen. Die Kalibrierung wird aus den Differenzen zwischen den theoretischen Koordinaten der angefahrenen Positionen und den tatsächlich gemessenen Koordinaten errechnet.

Dieses Verfahren hat den Nachteil, dass die Messgenauigkeit des Koordinaten-Messgeräts über den Messbereich variiert und damit nicht homogen ist. Die Genauigkeit wird also eingeschränkt.

Es ist also die der Erfindung zu Grunde liegende Aufgabe, die oben genannten Nachteile des Stands der Technik zu überwinden und ein Verfahren bereitzustellen, bei dem Positionskoordinaten insbesondere von mehreren Punkten mit hoher Genauigkeit bestimmt werden können.

Diese Aufgabe wird gelöst durch ein Verfahren gemäß Anspruch 1. Erfindungsgemäß wird dabei ein Verfahren zum Bestimmen von Positionskoordinaten mit den Schritten bereitgestellt:
a) Bereitstellen eines Retroreflektors an einer zu bestimmenden Position,
b) Bestimmen der Abstände zwischen wenigstens drei unterschiedlichen, vorbestimmten Positionen und der des Retroreflektors unter Verwendung wenigstens eines Laser-Interferometers,
c) Bestimmen der Positionskoordinaten des Retroreflektors bzgl. der wenigstens drei unterschiedlichen, vorbestimmten Positionen aus den bestimmten Abständen.

Ein Retroreflektor ist eine Spiegelanordnung, die auftreffendes Licht parallel zur Einfallsrichtung reflektiert. Ein Retroreflektor umfasst drei rechtwinklig zueinander ausgerichtete Planspiegel.

Mit einem Laser-Interferometer können relative Abstände bestimmt werden. Dabei emittiert ein Laser einen Strahl, der durch einen Strahlteiler aufgeteilt wird. Ein Strahl wird als Referenz verwendet, während der andere von dem Retroreflektor in einem bestimmten Abstand reflektiert wird. Der reflektierte Strahl wird dann mit dem Referenzstrahl zusammengeführt, wobei dann aus der sich bildenden Interferenz der Abstand zwischen dem Interferometer und dem Retroreflektor bestimmt wird.

Durch die drei unterschiedlichen, vorbestimmten Positionen kann in dem erfindungsgemäßen Verfahren eindeutig ein Koordinatensystem festgelegt werden. Beispielsweise kann man ausgehend von einem Punkt in die Richtung der jeweils anderen Punkte Vektoren erhalten, die zwei Koordinatenrichtungen darstellen; eine dritte Koordinatenrichtung kann sich dann aus dem Vektorprodukt der ersten beiden Vektoren ergeben. Als Koordinatenursprung kann einer der vorbestimmten Punkte gewählt werden.

Wenn die Abstände zwischen den wenigstens drei unterschiedlichen, vorbestimmten Positionen und der Position des Retroreflektors bestimmt worden sind, ergeben sich die Koordinaten des Retroreflektors bzgl. der wenigstens drei Positionen oder einem entsprechenden Koordinatensystem aus dem Schnittpunkt der Kugeln, die jeweils als Mittelpunkt eine der wenigstens drei Positionen und als Radius den jeweiligen Abstand aufweisen.

Mit dem erfindungsgemäßen Verfahren können somit die Positionskoordinaten des Retroreflektors mit sehr hoher Genauigkeit bestimmt werden, da mit Hilfe von LaserInterferometern Distanzen mit hoher Präzision gemessen werden können. Da weiterhin von allen Positionen aus und in alle Richtungen die Abstände unter Verwendung eines Laser-Interferometers bestimmt werden, ist auch die Genauigkeit des Verfahrens über den gesamten Messbereich konstant.

Gemäß einer vorteilhaften Weiterbildung kann in Schritt b) an wenigstens zwei der unterschiedlichen, vorbestimmten Positionen ein eigenes Laser-Interferometer bereitgestellt werden.

Dadurch wird insbesondere eine Beschleunigung des Verfahrens erzielt, weil alle Laser-Interferometer gleichzeitig die jeweilige Distanz zum Retroreflektor bestimmen können. Insbesondere kann an jedem der wenigstens drei unterschiedlichen, vorbestimmten Positionen ein eigenes Laser-Interferometer bereitgestellt werden.

Gemäß einer vorteilhaften Alternative kann in Schritt b) ein einziges Laser-Interferometer nacheinander an wenigstens zwei der unterschiedlichen, vorbestimmten Positionen bereitgestellt werden. Die Verwendung eines gemeinsamen Laser-Interferometers für mehrere Punkte ergibt eine kostengünstige Variante des Verfahrens.

Die beiden zuvor genannten Weiterbildungen können jedoch auch kombiniert werden, indem beispielsweise an zwei unterschiedlichen, vorbestimmten Positionen jeweils ein eigenes Laser-Interferometer bereitgestellt wird und an zwei weiteren unterschiedlichen, vorbestimmten Positionen nacheinander ein einziges Laser-Interferometer bereitgestellt wird.

Bei den zuvor beschriebenen Verfahren kann vorzugsweise das wenigstens eine Laser-Interferometer an den wenigstens drei unterschiedlichen, vorbestimmten Positionen bereitgestellt werden, wobei die Koordinaten der wenigstens drei unterschiedlichen, vorbestimmten Positionen bzgl. eines Koordinatensystems mit hoher Genauigkeit bestimmt sind. Als Koordinatensystem kann insbesondere ein durch die Positionen selbst festgelegtes Koordinatensystem gewählt werden, so dass die relativen Koordinaten der Positionen bestimmt sind. Eine Kenntnis der Positionen der Laser-Interferometer mit hoher Genauigkeit verbessert weiter die Genauigkeit des Verfahrens.

Gemäß einer vorteilhaften Weiterbildung der zuvor beschriebenen Verfahren kann in Schritt b) ein Lasertracker als Laser-Interferometer verwendet werden.

Ein Lasertracker umfasst sowohl ein Laser-Interferometer als auch zwei Winkelencoder, mit denen jeweils ein Höhen- und ein Seitenwinkel bestimmt werden kann. Mit einem einzigen Lasertracker können also grundsätzlich von einem Punkt aus die Koordinaten einer bestimmten Position (bspw. eines Retroreflektors) bestimmt werden. Allerdings arbeitet in einem Lasertracker das Laser-Interferometer im allgemeinen mit einer höheren Präzision als die Winkelencoder.

Bei der Weiterbildung des erfindungsgemäßen Verfahrens durch die Verwendung von Lasertrackern wird dagegen lediglich das Laser-Interferometer des Lasertrackers verwertet. Die Positionskoordinaten ergeben sich dann durch Abstandsbestimmungen mit dem Interferometer von wenigstens drei unterschiedlichen, vorbestimmten Positionen aus. Dadurch wird also eine sehr hohe Genauigkeit erreicht, nur der hochgenaue Anteil der Messung eines Lasertrackers verwendet wird.

Bei herkömmlichen Lasertrackern wird ein von dem Retroreflektor zurückkommender Strahl auf eine Vier-Quadranten-Fotozelle gelenkt. Dabei kann festgestellt werden, ob der Strahl das Zentrum des Retroreflektors getroffen hat. Falls eine Abweichung festgestellt wird, kann mittels Servomotoren der Laserstrahl geeignet gerichtet werden. Wird insbesondere der Retroreflektor bewegt, erlaubt eine entsprechende Steuerung, den Reflektor zu verfolgen.

Vorteilhafterweise kann in Schritt b) ein Lasertracker mit einem Absolut-Distanzmesser (ADM) verwendet werden. Dies vereinfacht das Verfahren wesentlich, da das Laser-Interferometer zu Beginn des Verfahrens nicht kalibriert werden muss, indem der Retroreflektor zunächst in eine Referenzposition gebracht wird.

Gemäß einer vorteilhaften Weiterbildung der zuvor beschriebenen Verfahren können in Schritt b) die Abstände zwischen mehr als drei unterschiedlichen, vorbestimmten Positionen und der des Retroreflektors bestimmt werden.

Beim Bestimmen von mehr als drei Abständen von jeweils unterschiedlichen Positionen aus werden zusätzliche Messergebnisse erhalten, die grundsätzlich für die Positionsbestimmung nicht benötigt werden. Diese zusätzlichen Messungen können jedoch dazu verwendet werden, etwaige Messfehler zu reduzieren und die Genauigkeit des Verfahrens zu erhöhen.

Vorzugsweise kann Schritt c) ein Optimieren der Genauigkeit der bestimmten Positionskoordinaten umfassen. Damit lässt sich insbesondere bei der Verwendung von mehr als drei unterschiedlichen, vorbestimmten Positionen die Qualität des Ergebnisses verbessern. Zur Optimierung der Genauigkeit können Verfahren aus der Geodäsie, insbesondere Netzausgleichungen, angewendet werden.

Gemäß einer vorteilhaften Weiterbildung können die zuvor beschriebenen Verfahren weiterhin ein Transformieren der bestimmten Positionskoordinaten bzgl. der wenigstens drei unterschiedlichen, vorbestimmten Positionen in Positionskoordinaten bzgl. eines von den wenigstens drei Positionen unabhängiges Koordinatensystem umfassen.

Auf diese Weise können die Koordinaten insbesondere in ein Koordinatensystem transformiert werden, beispielsweise ein Koordinatensystem einer Werkzeugmaschine oder das einer Wergzeugmaschine angepasst, das auf die weitere Verwendung und Verarbeitung der Koordinaten optimiert ist.

Die Erfindung stellt weiterhin ein Verfahren zum Kalibrieren von Werkzeugmaschinen, insbesondere CNC-Bearbeitungszentren, oder Koordinaten-Messmaschinen mit den Schritten bereit:
a) Veranlassen der Werkzeugmaschine oder der Koordinaten-Messmaschine, wenigstens eine vorgegebene Position anzufahren,
b) Bestimmen der Koordinaten aller angefahrenen Positionen nach einem der zuvor beschriebenen Verfahren,
c) Bestimmen der Differenzen zwischen den Koordinaten der vorgegebenen Positionen und der jeweils angefahrenen Positionen,
d) Kalibrieren der Werkzeugmaschine oder Koordinaten-Messmaschine unter Verwendung der Differenzen.

Mit diesem Verfahren kann insbesondere überprüft werden, wie stark eine theoretische Position, die in eine Maschine eingegeben wird, woraufhin die Maschine eine entsprechende Position anfährt, sich von der dann tatsächlich angefahrenen Position unterschiedet. Dieser Unterschied wird dann verwendet, eine Kalibrierung und damit geeignete Anpassung der Maschine vorzunehmen.

Vorzugsweise kann in Schritt a) mehr als ein Punkt angefahren werden. Auf diese Weise lässt sich insbesondere die Genauigkeit der Überprüfung und Kalibrierung verbessern.

Weitere Merkmale und Vorteile der Erfindung ergeben sich aus den nachfolgend mit Bezugnahme auf die Figuren beschriebenen Beispiele.
- Figur 1: illustriert ein Bestimmen von Positionskoordinaten unter Verwendung von einem Lasertracker und
- Figur 2: illustriert das Bestimmen von Positionskoordinaten unter Verwendung von drei Lasertrackern.

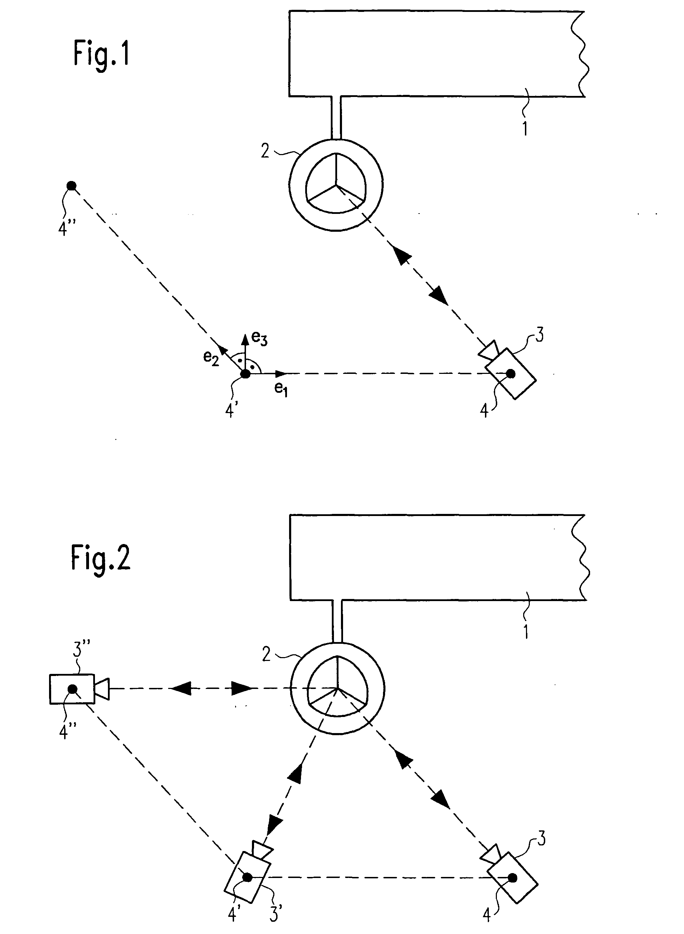

In Figur 1 ist der Arm 1 einer Werkzeugmaschine gezeigt, der, wie durch den Doppelpfeil angedeutet, beweglich ist. An diesem Werkzeugarm ist ein sphärischer Retroreflektor 2 angeordnet. Die Position dieses Retroreflektors 2 und damit auch die entsprechende Position des Werkzeugarms soll mittels eines Lasertrackers 3 bestimmt werden.

Hierfür wird ein Lasertracker 3 zunächst an einer ersten, mit hoher Genauigkeit bestimmten Position 4 bereitgestellt. Von dieser Position aus wird mittels des Lasertrackers 3, d.h. insbesondere mittels des Laser-Interferometers des Lasertrackers 3, die Entfernung zwischen der Position des Lasertrackers und der Position des Retroreflektors 2 bestimmt.

Nach Bestimmen dieser Position wird der Lasertracker 3 jeweils an den Positionen 4' und 4" bereitgestellt. Von jeder dieser Positionen aus wird der Abstand zwischen der jeweiligen Position des Lasertrackers und dem Retroreflektor 2 bestimmt.

Die Positionen der Punkte 4, 4' und 4" sind bekannt, so dass sich als zwei mögliche Koordinatenrichtungen beispielsweise die Verbindungsgeraden 4'-4 und 4'-4" ergeben. Als Ursprung des Koordinatensystems kann der Punkt 4' gewählt werden. In der Figur sind den Koordinatenachsen entsprechende Einheitsvektoren e₁ und e₂ gezeigt. Die dritte Koordinatenrichtung (und damit der Vektor e₃, ggf. mit geeigneter Normierung) ergibt sich dann beispielsweise aus dem Vektorprodukt von den parallel zu den ersten zwei Koordinatenrichtungen liegenden Vektoren e₁ und e₂. Natürlich sind andere Koordinatensysteme, die auf den drei Punkten 4, 4' und 4" beruhen, genauso möglich.

Zusätzlich zu den Koordinaten der gezeigten einen Position des Retroreflektors 2 ist es auch möglich, den Werkzeugarm 1 zu bewegen und weitere Positionskoordinaten des Retroreflektors und damit des Werkzeugarms zu bestimmen.

Figur 2 zeigt ein alternatives Ausführungsbeispiel, bei dem die Positionskoordinaten eines Retroreflektors bestimmt werden. In dem gezeigten Beispiel sind an jedem der Punkte 4, 4' und 4" jeweils ein eigener Lasertracker 3, 3' und 3" angeordnet. Auf diese Weise kann das Bestimmen der Positionskoordinaten beschleunigt werden, da alle drei Lasertracker gleichzeitig die Abstandsmessungen durchführen können. Insbesondere können die Lasertracker auch eine Bewegung des Werkzeugsarms 1 mitverfolgen und dabei die sich jeweils ändemde Position bestimmen.

## Patentansprüche

1. Verfahren zum Bestimmen von Positionskoordinaten mit den Schritten:
a) Bereitstellen eines Retroreflektors an einer zu bestimmenden Position,
b) Bestimmen der Abstände zwischen wenigstens drei unterschiedlichen, vorbestimmten Positionen und der des Retroreflektors unter Verwendung wenigstens eines Laser-Interferometers,
c) Bestimmen der Positionskoordinaten des Retroreflektors bezüglich der wenigstens drei unterschiedlichen, vorbestimmten Positionen aus den bestimmten Abständen.

2. Verfahren nach Anspruch 1, wobei in Schritt b) an wenigstens zwei der unterschiedlichen, vorbestimmten Positionen ein eigenes Laser-Interferometer bereitgestellt wird.

3. Verfahren nach Anspruch 1 oder 2, wobei in Schritt b) ein einziges Laser-Interferometer nacheinander an wenigstens zwei der unterschiedlichen, vorbestimmten Positionen bereitgestellt wird.

4. Verfahren nach einem der vorangegangenen Ansprüche, wobei in Schritt b) ein Lasertracker als Laser-Interferometer verwendet wird.

5. Verfahren nach Anspruch 4, wobei in Schritt b) ein Lasertracker mit einem Absolut-Distanzmesser (ADM) verwendet wird.

6. Verfahren nach einem der vorangegangenen Ansprüche, wobei in Schritt b) die Abstände zwischen mehr als drei unterschiedlichen, vorbestimmten Positionen und der des Retroreflektors bestimmt werden.

7. Verfahren nach einem der vorangegangenen Ansprüche, wobei Schritt c) ein Optimieren der Genauigkeit der bestimmten Positionskoordinaten, vorzugsweise unter Verwendung einer Netzausgleichung, umfasst.

8. Verfahren nach einem der vorangegangenen Ansprüche, weiterhin umfassend ein Transformieren der bestimmten Positionskoordinaten bezüglich der wenigstens drei unterschiedlichen, vorbestimmten Positionen in Positionskoordinaten bezüglich eines von den wenigstens drei Positionen unabhängiges Koordinatensystem.

9. Verfahren zum Kalibrieren von Werkzeugmaschinen, insbesondere CNC-Bearbeitungszentren, oder Koordinaten-Messmaschinen mit den Schritten:
a) Veranlassen der Werkzeugmaschine oder der Koordinaten-Messmaschine, wenigstens eine vorgegebene Position anzufahren,
b) Bestimmen der Koordinaten aller angefahrenen Positionen nach dem Verfahren nach einem der vorangegangenen Ansprüche,
c) Bestimmen der Differenzen zwischen den Koordinaten der vorgegebenen Positionen und der jeweils angefahrenen Positionen,
d) Kalibrieren der Werkzeugmaschine oder Koordinaten-Messmaschine unter Verwendung der Differenzen.

10. Verfahren nach Anspruch 9, wobei in Schritt a) mehr als ein Punkt angefahren wird.
